# EUROPEAN PATENT SPECIFICATION

(11) **EP 1 483 639 B1**
(45) Date of publication and mention of the grant of the patent: **21.11.2007**
(21) Application number: 03713134.9
(22) Date of filing: 04.03.2003
(51) Int. Cl.: G05D 23/19, F02N 17/06, B60H 1/00

(54) **A VEHICLE PREHEATING METHOD AND DEVICE**
FAHRZEUGVORHEIZVERFAHREN UND EINRICHTUNG
PROCEDE ET DISPOSITIF DE PRECHAUFFAGE DE VEHICULE

(30) Priority: 05.03.2002 SE 0200664
(43) Date of publication of application: 08.12.2004
(73) Proprietor: Calix Automotive AB, 63005 Eskilstuna (SE)
(72) Inventor: SKANBERG, Torbjörn, S-436 58 Hoväs (SE); BERGMAN, Andreas, S-645 43 Strängnäs (SE); WERNER, Johan, S-117 62 Strockholm (SE)
(74) Representative: Reyier, Ann-Mari
(86) International application number: PCT/SE2003/000346
(87) International publication number: WO 2003/075112

(56) References cited:
- US-A- 4 436 064
- US-A- 4 864 100
- US-A- 5 012 070
- US-A- 5 115 116
- US-A- 5 280 158
- US-A- 5 285 963

## Description

### TECHNICAL FIELD

The present invention relates to a method for preheating at least two components of a motor-driven vehicle, the vehicle comprising an engine, a passenger compartment, and a cooling system arranged to cool the engine during the operation of the vehicle, wherein one of said components is the engine of the vehicle and one other component is the air in the passenger compartment. The invention also relates to a device for heating of at least two components in a motor-driven vehicle, one being the engine and the other the air in the passenger compartment. The invention also relates to a motor-driven vehicle comprising a device for heating at least two components in the vehicle.

### PRIOR ART

When it is cold, the performance of motor-driven vehicles is decreased. The oil of the engine congeals, which decreases the lubrication and increases the wearing of the engine, the combustion becomes poor, which increases the fuel consumption and gives larger polluting emissions, the windscreens are covered with snow and ice, which diminishes the visibility for a driver, and it is cold inside the passenger compartment of the vehicle, which disturbs the driver's ability to concentrate.

It is known since earlier to preheat motor-driven vehicles before the vehicle is used. One example of such a device for preheating is a device comprising a fan and an electrical heating element. The device is put inside the passenger compartment, wherein the fan blows cold air towards the heating element, which heats the air. It is also known to put electrical heating elements into the cooling water of the vehicle, making the cooling water circulate due to a siphon effect and heating the engine block. These devices are usually operated with household electricity having a low power output, and thus the devices must be operated well ahead of the vehicle being used in order for a sufficient amount of energy to be transferred to the vehicle.

Contact heaters for heating the engine block in automobiles are also known. A contact heater is a heating element applied in contact with the engine block, wherein the heat is distributed throughout the block by heat conduction. Contact heaters are first of all heating the lower part of the engine, and thus also the oil of the engine. It takes a long time to heat the engine in this way, and it also takes a long time before the heat is distributed to the upper parts of the engine and thus to the combustion chambers of the engine.

It is also known since earlier to heat several different kinds of temperature sensitive components in motor-driven vehicles, beside the engine and the air in the passenger compartment. Such components may be, for example, the battery, the motor oil, the brake fluid, the washer fluid, or the fuel, if the vehicle is an automobile. These less components are usually heated with electrical heating elements.

In the patent document US 5,012,070 a device for preheating an automobile is shown, the device using the cooling water of the automobile, the automobile's already existing heat exchanger between the cooling water and the ventilation air, and the ventilation fan of the car for heating the air in the passenger compartment. An extra tube comprising an electrical heating element is connected to the cooling water next to the heat exchanger. During the preheating of the air in the passenger compartment, two valves are closed such that a circuit consisting only of the extra tube and the heat exchanger is formed. The cooling water in the circuit is heated, whereby the water circulates by itself. The heat exchanger is heated by the water, the fan is activated to blow air through the heat exchanger, and the air thus heated in the heat exchanger is further blown into the passenger compartment. The heating element in the tube is thus arranged to heat only the air in the passenger compartment and not to heat the engine at the same time. The device further comprises a control unit directing energy to this heating element as well as to other heating elements arranged to heat for example the engine and other components and to already existing heating elements in the vehicle, such as the defroster. The control unit also comprises a timer, by which a user can set when a certain component shall begin to be heated. Thus, the heating of an object that demands a long heating time can be begun before the heating of an object demanding a shorter heating time. The control unit also shuts down the heating of the objects in a cyclic way, if the available power via the household electricity is not sufficient to heat all the objects at the same time. It thus happens that only a smaller part of the available power is used at a given time during the heating, for example when the heating of two objects only requires a part of the available power and the heating of a third object would result in exceeding the available power.

Other examples of engine heaters are found in the documents WO 01/33071, SE 7412857-0, and US 6,116,513.

One problem with the engine heaters described above is that they waste energy in such a way that they give a poor heating distribution between the different parts of the vehicle. It happens that some parts are heated too much, while other parts at the same time are heated too little with respect to the purpose of obtaining a performance improvement for the vehicle. In the document US 5, 012,070 it is true that the heating of the engine block, that demands a much energy in order to be heated, is begun before the heating of other parts of the vehicles, but no consideration is taken to whether the engine or some other part of the vehicle becomes unnecessarily heated because of too long a heating time. A further problem with the engine heaters described above is that, when it is very cold, it happens that the engine heaters are not able to heat the vehicle properly, and therefore only a very low or no performance improvement of the vehicle is achieved. Further, only a small part of the available power is use, since the heating of the objects only can be on or off, which prolongs the time needed for the heating. The engine heaters described above thus give a non-optimal performance improvement for the vehicle.

### SUMMARY OF THE INVENTION

The object of the present invention is to provide a method for preheating a motor-driven vehicle making it possible to more effectively utilize the power available for the preheating.

This object is achieved with the method according to claim 1.

Thus, the thermal energy supplied to the fluid is distributed infinitely variably between the engine and the air in the passenger compartment in any proportion. By this, it is achieved partly that the power with which the engine and the air in the passenger compartment is heated, respectively, can be changed over time during the preheating, since the demand for a constant power only applies to the sum of both the heating powers. It is therefore also possible to take into consideration more parameters during the preheating of the engine than previously. In part it is also achieved that a larger portion of the available power can be used for the preheating, since the heating of the fluid and the heating of, for example, other components can more easily be adapted to the maximally available power. Thus, substantially the all of the available power can be utilised for the preheating. Other components can, of course, also be heated by transferring heat from said fluid, which would further increase the advantage and flexibility with the invention. By controlling the distribution of the transferred thermal energy to the fluid in said way, a very simple and effective control of the distribution is further achieved.

Such an infinitely variable distribution of the power between the components as described here, is very difficult to achieve only with electrical heating elements, since both the voltage and the resistance in the heating elements normally are constant, which also gives a constant heat output in the elements. To achieve an infinitely variable distribution only with electrical heating elements, it would therefore be necessary with either a controllably variable resistance in the elements or with a variable voltage applied to them.

According to one embodiment of the invention, the magnitude of the flow of the fluid through the engine is controlled in such a way that a part of, or all of, the circulating flow is guided to pass outside the engine. Thus, a very simple method for controlling the heating of the engine is achieved. The part of the flow guided to pass outside the engine emits substantial nothing of its thermal contents, which thus can be left available for heating other components. Naturally, the flow through the engine can be varied from the whole flow passing through the engine, i.e. no part of the flow is guided past the engine, to no part of the flow passing through the engine, i.e. the whole flow is guided past the engine.

According to a further embodiment of the invention, the transfer of heat from the fluid to the air in the passenger compartment is controlled by controlling the magnitude of the flow of the fluid through the heat exchanger. Thus, a simple control of the thermal transfer to the air in the passenger compartment is achieved. Preferably, the magnitude of the flow of the fluid through the heat exchanger is controlled in such a way that a part of the circulating flow is guided through the heat exchanger and a remaining part of the flow is guided to pass outside the heat exchanger.

According to a further preferred embodiment of the invention, the heat exchange from the fluid to the air in the passenger compartment is controlled by controlling the magnitude of an airflow through the heat exchanger and into the passenger compartment. This gives a very efficient and inexpensive way to control the heat transfer from the air in the passenger compartment, since no further fluid conductor is needed. When no or a low air flow is blown through the heat exchanger, the fluid passing through the heat exchanger retains its thermal content, and thus the heat is left available for other components.

According to a further embodiment of the invention, the method comprises producing heating times for the components and a distribution of the available power for the preheating of the components between the components being heated, with consideration to one or several parameters, and controlling the heating of the components of the vehicle, the flow of the fluid through the engine and through the heat exchanger and/or said air flow through the heat exchanger, in accordance with said heating times and power distribution. Thus, a satisfactory control of the preheating of the components of the vehicle is achieved.

According to a further preferred embodiment, one of said parameters comprises information about the power available for the preheating, wherein the preheating is controlled in such a way that substantially all of the available power is used throughout substantially the entire preheating of the components of the vehicle. Preferably, the preheating is controlled such that at least 90% and most preferably at least 95% of the available power is used during the preheating during substantially the entire preheating of the vehicle. If further components are to be heated with electrical heating elements with constant power, the fluid can be heated with several electrical heating elements, each with constant powers, in order to avoid that the limit of the available power is exceeded, wherein one or several of the heating elements can be disconnected when the further components are heated. Thus, the sum of the powers of the heating elements and other possible parts, such as fans and pumps, can be adapted to utilise substantially the entire available power together.

According to a further preferred embodiment of the invention, one of said parameters is the length of the time interval available for the preheating. Preferably, the method comprises:
- indicating a point of time when the vehicle is intended to be used or the time up to this point of time,
- producing said time interval for the preheating with consideration to the time up to said point of time.
By controlling the heating of the components with consideration to the available power and the length of said time interval, it is possible to predict the total amount of energy that will be transferred to the vehicle during the heating. Thus, it is also possible to distribute the amount of energy in a way that optimally improves the performance of the vehicle. It is further possible to take into consideration even more parameters during the heating with knowledge about the length of the time interval than if the time interval had been unknown.

According to a preferred embodiment of the invention, consideration is also taken to a priority ranking between the components during the production of said heating times and power distribution, when the time interval is shorter than a certain threshold time, wherein the need for heating a high priority component is satisfied at the expense of the need for heating a component with a lower priority. Thus, less important components with respect to the performance of the vehicle are left out completely or partly from the heating, when the amount of energy is too small to sufficiently heat all the components of the vehicle, this energy is instead utilised to heat components for which a rise in temperature gives a larger performance improvement. Accordingly, a larger performance improvement in the vehicle is achieved when the vehicle is heated with a certain given amount of energy. The threshold time mentioned above is determined preferably as the least time, at which there is time for all components to be heated to a sufficient temperature, i.e. when the priority between the components is not needed. Thus, the threshold time can, for example, be dependent on the temperature of the surroundings, the temperature of the components, and the available power.

According to a further preferred embodiment of the invention, the method comprises the further step of selecting a purpose with the preheating, wherein said priority ranking depend on the selected purpose. Thus, the components, which are judged as important to the performance of the vehicle in accordance with said purpose with the preheating, are placed high in the priority ranking. The purpose of the heating can be, for example, to improve the vehicle driver comfort, to decrease the emission of exhaust gases, and environmental harmful substances, respectively, to decrease the fuel consumption, to decrease the wear of the engine, to improve the visibility for the driver, to improve the safety during driving or to improve the possibility to start the engine, and to improve the large power output ability of the engine already at the starting of the engine, respectively. The purpose can also be selected as a subset of the purposes described above or as a combination of two or several of the purposes above or subsets thereof.

According to a further preferred embodiment of the invention, consideration is taken to the temperature of the surroundings during the production of said heating times and power distribution. This is advantageous since a component's need for energy is partly decided by the temperature of the component which in turn is decided by the temperature of the surroundings, at least when the vehicle has not been operated for a while. For example, it happens that the windscreens of the vehicle are covered with snow and ice, at which the windscreens are heated by the air in the passenger compartment in order for the snow and the ice to melt or become easier to remove. If the temperature is low, the air in the passenger compartment must therefore be heated earlier, so that heat may be transferred to the ice and snow at the windscreens.

According to a further preferred embodiment of the invention, consideration is also taken to heat transports from said components to the surroundings of the vehicle during the production of said heating times and power distribution. By considering the heat transports from the components to the surroundings of the vehicle, the heat loss can be decreased, and therefore the energy supplied is utilised to heat the components in a better way. For example, the passenger compartment of the vehicle emits much heat, and thus the air in the passenger compartment should be heated later in order to avoid energy losses. The heat transport is dependent on the temperature difference between the surroundings and the temperature of the components, and thus, in one embodiment of the invention, consideration is also taken to one or both of these two parameters.

According to a further preferred embodiment of the invention, consideration is also taken to the heat capacity of the components during the production of said heating times and power distribution. By considering the heat capacity during the heating, it is satisfied that each component is assigned an amount of energy needed for the component to reach an intended temperature and thus an intended performance improvement. According to a preferred embodiment of the invention, said priority ranking between the components is also dependent on the heat capacity of the components, thus a component needing a smaller amount of energy for a certain performance improvement, is given priority before a component demanding a larger amount of energy for the same degree of performance improvement.

According to a further preferred embodiment of the invention, a part of a component that is temperature sensitive with respect to the performance of the vehicle is heated at the cost of other parts of the same component during the heating. Thus, the energy is utilised to heat the most important part of the component to a high temperature instead of heating the entire component to a homogenously lower temperature, thus the component's performance is more improved during heating with a certain determined amount of energy.

According to a further preferred embodiment of the invention, said power distribution is variable over the time within said time interval. Preferably, the control of the preheating and the production of said heating times and power distribution takes places with consideration to one or several parameters: available power, the temperature of the surroundings, the temperature change of the surroundings, the temperature of the components, the heat capacity of the components, the remaining time until the vehicle is intended to be used, and the capacity of the heating elements and the heat generation member.

According to a further preferred embodiment of the invention, the time interval for the preheating is produced in such a way that the time up to the point of time when the vehicle is intended to be used is longer than a certain threshold time, a time interval is produced that is long enough to allow a sufficient amount of energy to be transferred to the vehicle with respect to the temperature in the surroundings and available power and when the time up to the point of time when the vehicle is intended to be used is less than said threshold time, a time interval is produced that is as long as possible with respect to available time. Thus, it is not risked that an unnecessary large amount of energy is transferred to the vehicle when the time up to the point of time when the vehicle is intended to be used is long and at the same time it is secured that as a large as possible amount of energy is transferred when the time up to the point of time when the vehicle is intended to be used is short. This threshold time can be the same or another threshold time than the threshold time mentioned previously. Preferably, the magnitude of the threshold time is dependent on the temperature of the surroundings in such a way that the threshold time increases when the temperature decreases.

According to a preferred embodiment of the invention, said time interval is produced automatically. By this is meant, that a person does not need to produce the time interval or needs to order a production, but the production is carried out automatically immediately upon entering of said point of time when the vehicle is intended to be used. Alternatively, a maximum limit can also be set for the length of the time interval, wherein a person who only wants to heat the vehicle in part, for example due to high energy costs, can limit the heating of the vehicle and thus the use of energy.

According to a further preferred embodiment of the invention, a component is heated with a low power in the beginning of the heating and with a high power at the end of the heating when the time interval is longer than a certain second threshold time. Preferably, a component is heated with a low heat capacity and/or a high thermal transport, such as the air in the passenger compartment of the vehicle, in this way compared to a similar component with a higher heat capacity and/or a lower thermal transport, such as the engine of the vehicle, wherein, for example, the thermal loss from the vehicle to the surroundings of the vehicle is decreases and/or the temperature of the component does not drop substantially due to energy and thermal transport from the components. If the time interval is shorter than said second threshold time, the time interval can, for example, be so short that the thermal transport does not have any effect and that the amount of energy supplied becomes so small that it only suffices to one or a few components.

According to a further preferred embodiment of the invention, a component is heated with a high power in the beginning of the heating and with a low power at the end of the heating, when the time interval is longer than a certain third threshold time. Preferably, a component with a high heat capacity and/or a low thermal transport, such as the engine of the vehicle, is heated in this way compared to a similarly important component with a lower heat capacity and/or a higher thermal transport, such as the air in the passenger compartment of the vehicle. If the time interval is shorter than said third threshold time, the time interval can, for example, be so short that the thermal transport does not have any effect and that the amount of energy supplied becomes so small that it only suffices to one or a few components.

Another object of the present invention is to provide a device for preheating a motor-driven vehicle that heats the components in such a way that it is possible to distribute the amount of energy supplied in such a way that a higher increase in the performance of the vehicle is achieved and which makes it possible to take into consideration more parameters during the preheating in comparison with the engine heaters according to the prior art.

This object is achieved with the device described in the preamble to claim 12 and which is characterised in that the device comprises one or several controllable valves arranged to control the magnitude of a flow of the fluid through the engine and a control means to control the magnitude of the transfer of heat from the fluid to the air in the passenger compartment in said heat exchanger, such that the thermal power supplied to the fluid is transferred to and distributed between the engine and the air in the passenger compartment. This device shows the advantages described in connection with the method according to the invention. Furthermore, the heating of both the engine and the air in the passenger compartment is achieved with only one heating element making the device less expensive.

According to one embodiment, the device comprises a second fluid conductor being connected to the first fluid conductor on each side of the engine, such that at least a part of the flow of the fluid may bypass the engine of the vehicle through the second fluid conductor, wherein the device comprises a first controllable valve arrangement arranged to control the magnitude of the flow of the fluid through the second fluid conductor and the engine, respectively. Preferably, the second fluid conductor is shaped such that substantially the entire flow of the fluid is conductible through the second fluid conductor.

According to a further embodiment, the device comprises one or several controllable valves arranged to control the magnitude of a flow of the fluid through the heat exchanger. Preferably, the device comprises a third fluid conductor connected to the first fluid conductor on each side of the heat exchanger such that at least a part of the flow of the fluid may bypass the heat exchanger through the third fluid conductor, wherein the device comprises a second controllable valve arrangement arranged to control the magnitude of the flow of the fluid through the third fluid conductor and through the heat exchanger, respectively. Controlling the flow of the fluid away from each component, respectively, thus easily performs the control of the power distribution between the engine and the air in the passenger compartment. For example, the flow can be governed away from the engine through said second fluid conductor, wherein the thermal power in its whole instead is transferred to the heat exchanger and the air in the passenger compartment. The fluid conductors described above can comprise pipes, tubing, chambers, conduits, chutes, grooves, channels, or other technical solutions for conducting the fluid, which are known to a man skilled in the art.

According to a further embodiment, the device comprises a member arranged to control an airflow through the heat exchanger and thus control the transfer of heat between the fluid and the air in the passenger compartment in the heat exchanger. Preferably, the member is a controllable fan, arranged to achieve the airflow. The member can also be a controllable valve or a shutter controlling an opening for the airflow.

According to a further embodiment, the device comprises a pump connected to the first fluid conductor, which pump is arranged to achieve the circulating flow of the fluid through the first fluid conductor. Thus, a larger flow of the fluid is achieved than if the fluid only were circulating by self-circulation, wherein the increased stream makes the transfer of energy from the fluid to the engine more effective. Preferably, the pump is also controllable. Thus, the flow of the fluid is controllable, and the flow can be optimised for the best transfer of heat from the heat-generating member to the engine and other possible components that can be heated by the fluid.

According to a further embodiment, the device comprises an optimisation means arranged to provide heating times for the components and a distribution of the available power for the heating between the components, which heating times and which power distribution are produced with consideration to one or several parameters, and a control means controlling the heating of each and one of the components in accordance with said heating times and said power distribution, which control means is arranged to control said controllable valves and thus also controls the flow of the fluid through the engine and the heat exchanger, and/or said air flow member and the air flow through the heat exchanger, and thus the power distribution between the engine and the air in the passenger compartment of the vehicle.

According to a further embodiment, one of said parameters is the power available for the preheating, wherein the optimisation means and the control means are arranged to control the preheating, such that substantially the entire available power is used during substantially the entire preheating of the components of the vehicle. Thus, it is not necessary that the entire available power is converted into thermal energy, since some of the power is used for controlling, for example, the pump and the fan.

According to one embodiment, one of said parameters is the length of the time interval available for the preheating. Preferably, the device comprises an entering member for entering a point of time when the vehicle is intended to be used or the time up to this point of time, and a means for producing a time interval for the heating dependent on said entered time and a current time at the entering moment.

According to a further preferred embodiment of the invention, the device comprises a receiving means arranged to receive information about the temperature of the surroundings, wherein said optimisation means is arranged to provide heating times and a power distribution produced with consideration to the temperature of the surroundings. This second receiving means can either be arranged separately from the first means, partly integrated with the first receiving means or be a part of the first receiving means. It can also completely or partly be a part of said optimisation means, control means, or means for production of the time interval.

According to a further preferred embodiment of the invention, said optimisation means comprises a storage means to store previously produced heating times and power distributions. Thus, the device does not need to waste energy in carrying out new optimisations for each new preheating occasion, but the preheating may be carried out according to previously calculated and stored data.

According to a further preferred embodiment of the invention, the device comprises a temperature sensor intended to be arranged next to and to measure the temperature of the component, wherein said optimisation means takes consideration to the temperature of the component during the production of said heating times and power distribution. Thus, it is avoided that the device heats already heated components that, for example, have become heated due to a recent use of the vehicle.

According to a further embodiment of the invention, new heating times and a new power distribution is produced by said optimisation means after a certain time of heating the components of the vehicle, wherein the optimisation means at this following production takes consideration to the current temperatures of the components, wherein said control means is arranged to control the preheating in dependence on the last produced heating times and power distribution. Thus, a continuous controlling and monitoring of the heating of the components is taking place, wherein inaccuracies in the first optimisation is discovered and corrected.

Preferably, the device is adapted to be arranged into a land-based motor-driven vehicle. Preferably, the vehicle is a car or a lorry.

A further object of the invention is to provide a motor-driven vehicle comprising at least two components, the components of which are preheatable in such a way that it is possible to distribute the available amount of energy in a way so that the performance of the vehicle is improved and that makes it possible to take into consideration more parameters during the preheating in comparison to vehicles according to the prior art.

This object is achieved with the previously described vehicle comprising a device according to any of the described embodiments of the invention. Preferably, the vehicle is a land-based motor-driven vehicle.

### DESCRIPTION OF THE DRAWINGS

The invention shall now be described in greater detail as an example with reference to the appended drawings.
- Figure 1: shows a schematic view over an engine of a vehicle and parts of a cooling system of a vehicle and an example of a device for preheating according to one embodiment of the invention.
- Figures 2a-2f: show a number of power distributions and heating times optimised for different time intervals and different main purposes with the heating.
- Figures 3a-3b: show block diagrams over one example each of a device for preheating according to the invention.

### DESCRIPTION OF PREFERRED EMBODIMENTS

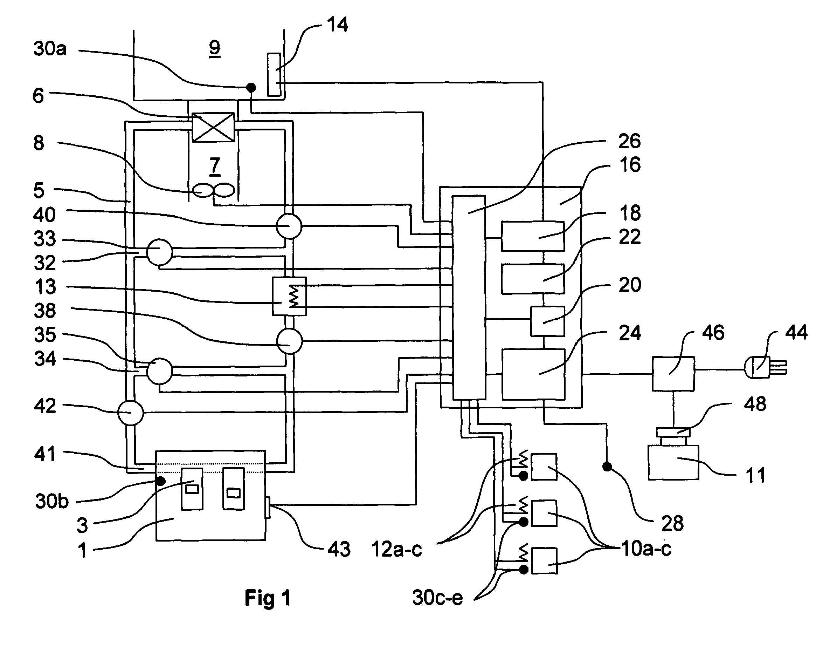

In Fig. 1, a motor-driven vehicle is shown schematically, comprising a device for preheating according to the invention. The vehicle comprises an engine 1, comprising combustion chambers 3, in which fuel is combusted during the operation of the vehicle. The vehicle further comprises a passenger compartment 9 for the driver and a ventilation channel 7 arranged to conduct air into the passenger compartment 9. The air in the ventilation channel 7 is blown into the passenger compartment 9 by means of a fan 8.

The figure also shows a cooling system comprising a fluid conductor 5. The fluid conductor is in this example a piping, while the fluid conductor 5 is a hose in another example. The fluid conductor is arranged to conduct a fluid, which in this example is a mixture of glycol and water, from the engine 1 to a heat exchanger 6. The heat exchanger 6 is arranged in connection to the ventilation channel 7 and arranged to transfer heat from the fluid to the air in the ventilation channel 7. The fluid conductor 5 is also arranged to conduct the fluid from the heat exchanger 6 and back to the engine 1 again.

In the figure, a pump 38 is also shown, arranged to pump the fluid through the fluid conductor 5 to the engine 1 and through the heat exchanger 6. For heating the engine 1 of the vehicle and the passenger compartment 9, the engine comprises a heat-generating member 13, which in this example is an insert heater, arranged in said fluid conductor 5 and arranged to heat the fluid. The fluid heated by the heat generating member 13 thereafter heats the engine 1 and the heat exchanger 6, the heat exchanger transfers heat to the air in the ventilation channel 7, and the heated air is blown into the passenger compartment 9 by means of the fan 8. Thus, both the engine 1 and the air in the passenger compartment 9 of the vehicle are heated with one and the same heat-generating member 13.

In the figure is also shown a second fluid conductor 34, which in this example is a hose and is connected to the first fluid conductor 5 at each side of the engine 1 with its both ends, and the second fluid conductor 34 is arranged to let said fluid bypass the engine 1. In the figure is also shown a third fluid conductor 32, which in this example is a hose and is connected to the first fluid conductor 5 at each side of the heat exchanger 6 with its both ends, and the third fluid conductor 32 is arranged to let said fluid bypass the heat exchanger 6. In another example of the invention, the second and the third fluid conductors are tubing instead of hoses.

The fluid conductor 5 further comprises a first controllable valve 40 arranged between the heat exchanger 6 and the connection to one end of the third fluid conductor 32, which first valve 40 is arranged to throttle the flow of the fluid through the heat exchanger 6. The fluid conductor 5 further comprises a second controllable valve arranged between the engine 1 and the connection to one end of the second fluid conductor 34, which second valve 42 is arrange to throttle the flow of the fluid through the engine 1. Further, the third conductor 32 comprises a third controllable valve 33 arranged to throttle the flow of the fluid through the third fluid conductor 32 and the second fluid conductor 34 comprises a fourth controllable valve 35 arranged to throttle the flow of the fluid through the second fluid conductor 34.

In a first state, in which the first valve 40 and the fourth valve 35 are completely closed and the second valve 42 and the third valve 33 are completely open, the entire flow of the fluid passes through the engine 1. In the first state thus only the engine 1 is heated and not the heat exchanger 6. In a second state, the first valve 40 and the fourth valve 35 are completely open and the second valve 42 and the third valve 33 are completely closed, wherein the entire flow of the fluid instead passes through the heat exchanger 6. In the second state thus only the heat exchanger 6 is heated and the air in the passenger compartment of the vehicle and not the engine 1. By partly opening and throttling said valves, respectively, a flow of the fluid is obtained, which passes both through the engine 1 and the heat exchanger 6 in different proportions.

In one example, the transfer of heat from the fluid to the air in the passenger compartment is controlled by controlling the airflow through the heat exchanger 6 and the channel 7 by a member, in this example with a fan 8. By changing the magnitude of the airflow the efficiency of the heat exchanger changes, wherein different amounts of the fluid's thermal content can be transferred to the air in the passenger compartment. If the airflow is completely shut, the transfer of heat is in principle also shut off. This control can be carried out even without the third fluid conductor 32; alternatively both the above methods for controlling the heat transfer in the heat exchanger can be used in combination.

In the figure is also shown a number of further components 10a, 10b, 10c of the vehicle beside the engine 1 and the air in the passenger compartment 9 of the vehicle. These further components are in this example the particle filter 10a, the catalyst 10b, and the seat heater 10c of the vehicle, but the further components can also be any of the vehicle's defroster, washer fluid, rear view mirrors, braking fluid, battery, oil, fuel, gearbox, or some other vehicle component known to the man skilled in the art. The vehicle further comprises three electrical elements 12a, 12b, 12c, each arranged to heat one of the further components 10a, 10b, 10c. In this example of the invention, the electrical heating elements are PTC-elements comprising a "ceramic material", the resistance of which increases at higher temperatures, wherein the temperature of the heating elements is self-regulating when a voltage is applied across the PTC-elements. In another example, the heating elements are ordinary resistance elements. The number of further components can, of course, be varied from no further components to in principally any number of components.

In the figure is also shown a general temperature sensor 28, arranged to sense the temperature of the surroundings of the vehicle. The vehicle further comprises a temperature sensor for the passenger compartment 30a arranged to sense the temperature of the passenger compartment 9 of the vehicle, an engine temperature sensor 30b arranged to sense the temperature of the engine, and three component temperature sensors 30c, 30d, 30e arranged to sense the temperature of the further components 10a, 10b, 10c. In one example of the invention, the device also comprises a sensor arranged to sense whether there is snow and/or ice on the windscreen of the vehicle. This sensor can, for example, be formed by two electrical contacts located at the windscreen, which measure the conductivity between the contacts.

In the figure is also shown a contact member 44 arranged to be connected to a power source for supplying the device for preheating with energy. In this example, the contact member is a plug and the power source is a wall socket for household electricity. With household electricity as the power source, the device for preheating receives a power of about 2,3 kW, since the voltage usually is 230V and household electricity in general is fused up to 10A, but this depends on the standards in different countries. The vehicle further comprises a coupling box 46 arranged to distribute power to a battery charger 48, which battery charger is arranged to charge the batteries 11 of the vehicle.

The device further comprises an input member 14 to let a user enter a point of time when the vehicle is intended to be used and to select a purpose with the preheating from one of improving the comfort for the driver of the vehicle, to decrease the emissions of exhaust gases and environmentally unhealthy compounds, respectively, to decrease the fuel consumption, to decrease the wear of the engine, or to increase the possibility to start the engine. In one example of the device, the input member 14 comprises means for entering if there is ice or snow at the windscreen of the vehicle. The input member 14 can also comprise means for entering a request to temporarily transfer heat from the engine 1 to the passenger compartment 9 of the vehicle, even if the engine is turned off. This is useful, for example, when the engine 1 already is warm after some time of driving and the engine 1 temporarily is shut off, for example, during a short break or because the driver waits for someone. In this example, the input member 14 is arranged in the passenger compartment 9 of the vehicle and comprises a display and a set of buttons. In another example of the invention, the input member 14 may be a remote control. In another further example, the input member is a mobile telephone. The device can also at the same time comprise several input member 14 of the same or different types.

The device further comprises a control unit 16 arranged to distribute the power available from the power source to the heat-generating member 13, the heating elements 12a, 12b, 12c, the pump 38 and the fan 8 for preheating of the components of the vehicle. The control unit is further arranged to control said controllable valves 40, 42, 33, 35 for controlling the flow of the fluid and the power distribution between the engine 1 and the air in the passenger compartment 9 of the vehicle, alternatively, the control unit 16 also controls the fan 8, and thus the control unit 16 also controls the airflow through the channel 7 and the heat exchanger 6. In another example of the invention, the power for operating the pump 38 and the fan 8 is taken from the battery of the vehicle 11. This is advantageous, since the pump 38 and the fan 8 in general are operated with a low voltage, wherein no voltage transformation is needed. A control unit 16, the coupling box 46, and the battery charger 48 are then instead arranged to recharge the battery 11.

The control unit 16 comprises a receiving means 18 arranged to receive the values entered into the input member, a clock member 28 arranged to measure the current time, a means for producing a time interval 22 for the preheating, an optimisation means 24 for producing heating times for and a power distribution between the components, which heating times and which power distribution are produced with consideration to available power and to the time interval for the heating, and a control means 26 arranged to control the preheating in accordance with said heating times and power distribution.

In this example, the optimisation means is arranged to also take into consideration the temperature of the surroundings, the temperatures of the different components 1, 9, 10a, 10b, 10c, the heat transports from said components 1, 9, 10a, 10b, 10c to the surroundings of the vehicle, the heat capacity of the components 1, 9, 10a, 10b, 10c, and a priority ranking between the components 1, 9, 10a, 10b, 10c, which priority ranking in turn depends on the purpose with the preheating selected and entered into the input member 14 during the production of said heating times and said power distribution.

The control unit 16 comprises in this example a processor and a number of memory modules. The control unit 16 further comprises one or several computer programs loadable into the processor, which computer programs are configured to make the control unit 16 perform the functions described above. The control unit 16 can also, in another embodiment, be realized in electronic circuits, such as in logical, digital, or analogue circuits.

The available power is determined in one example of the invention by a power sensor. The power can also be determined by the device being arranged for a specific power in advance or by using a voltage meter or a current meter, in which the power can be calculated by multiplying the voltage by the current, or the power can be determined in any other way known to the man skilled in the art. Preferably, the device is arranged for an available power being less than or the same as 4 kW. In a most preferred embodiment, the device is arranged for an available power being less than or the same as 3 kW.

The combustion chambers 3 of the engine 1, in which fuel is combusted during the operation of the vehicle, are the most temperature sensitive part of the engine 1 in respect of the combustion function of the engine 1. In this example of the invention, the fluid conductor 5 of the vehicle is connected to an inlet 41 in the upper part of the engine 1. Thus, the fluid mainly heats the combustion chambers 3 of the engine during the preheating of the engine 1 at the same time as the lower parts of the engine are only heated through heat conduction from the upper part of the engine. Thus, the most temperature sensitive part for the function of the engine is heated at the cost of the lower and not as temperature sensitive parts of the engine. In the example, the device also comprises a contact heater 43 arranged to heat the lower parts of the engine 1. When heating the lower parts of the engine the oil of the engine is also heated, thus the wear of the engine decreases during the heating of the lower part of the engine 1, hence this part is the part of the engine 1 which is the most temperature sensitive part for decreasing the wear of the engine 1.

One example of the method shall now be described with reference to figure 1. A user enters a point of time when the vehicle is intended to be used and a purpose with the preheating in the input member 14. In another example of the invention, the user instead enters a time up to the point of time when the vehicle shall be used. The input member transmits a signal corresponding to the point of time and a signal corresponding to the purpose with the preheating to the control unit 16. The signals are received in the control unit by the receiving means 18, which transmits the signal corresponding to the point of time to the means for producing a time interval 22 and the signal corresponding to the purpose to the optimisation means 24.

The time member 20 transmits a signal corresponding to the current time both to the means for producing a time interval 22 and to the control means. The means for producing a time interval 22 produces a time interval for the heating dependent on said entered time and the current time. In this example, the means for producing a time interval 22 also receives a signal from the general temperature sensor 28 corresponding to the temperature of the surroundings, wherein the length of the time interval also depends on the temperature in the surroundings in such a way that the time interval is prolonged when the temperature is low. The means for producing a time interval 22 thereafter transmits a signal to the optimisation means 24 corresponding to the length of the time interval.

The optimisation means 24 receives said signal corresponding to the length of the time interval, signals from the temperature sensors 28, 30a, 30b, 30c corresponding to the temperatures in the surroundings and the temperatures of the components, and a signal corresponding to the purpose with the preheating from the receiving means 18. The optimisation means thereafter produces heating times for and a power distribution between the components, which heating times and which power distribution are produced with consideration to available power and to said time interval for the heating. Said optimisation means 24 is furthermore arranged to produce the heating times for the components and the power distribution between the components with consideration to the temperature of the surroundings, the temperature of the components, the thermal transports from said components to the surroundings of the vehicle, the heat capacity of the components and a priority ranking between the components also, which priority ranking in its turn depends on the purpose of the preheating. The means for optimisation thus transmits signals corresponding to the heating times and the power distribution to the control means 26.

Said control means 26 receives the signal corresponding to the heating times and the power distribution, and the signal corresponding to current time, wherein the control means thereafter controls the preheating of each of the components 1, 9, 10 in accordance with said heating times, said power distribution, and current time.

During the control, the control unit 16 distributes power to the heat generating member 13, which controls the heat generation in the fluid, the heat elements 12a, 12b, 13c regulating the preheating of the further components 10a, 10b, 10c, the pump 38 controlling the total flow of the fluid, and the fan 8 controlling the air flow through the ventilation channel 7 and controlling said valves 40, 42, 33, 35 regulating the flow of the fluid through the engine 1 and the heat exchanger 6.

The device described above or variants thereof comprises in one example of the invention also control means for transferring heat from an already warm engine to the air in the passenger compartment 9 of the vehicle temporarily, even when the engine 1 is shut off. Preferably, this is carried out by activating the pump 38 and the fan 8 with energy taken from the battery 11 of the vehicle, whereby the fluid circulates in the first fluid conductor, become heated in the engine 1, and transfers heat to the heat exchanger 6 and the air in the passenger compartment 9. The device can also comprise control means for activating the cooling system of the vehicle for cooling the air in the passenger compartment 9, even if the engine 1 of the vehicle is shut off. The energy can then, for example, be taken from an external energy source, the battery 11, or a second and smaller engine or combustion cell. The device can also comprise a cooling arrangement for cooling the air in the passenger compartment of the vehicle, which cooling arrangement is controlled by the control unit 16. The cooling arrangement can, for example, be provided with a peltier element arranged to cool air blown into the passenger compartment. This cooling arrangement can be used for cooling the air in the passenger compartment during the operation of the vehicle. The cooling arrangement can also be used when the engine 1 of the vehicle is shut off, for example, before the vehicle is to be used or to maintain an already achieved cooling of the air in the passenger compartment 9, for instance when the engine 1 temporarily is shut off.

The device described above can, of course, be varied in a very large number of ways. Said fluid conductor can, for example, also comprise chambers with different shapes and be combinations of hoses, pipes, and so on. The control unit can be realised in hardware such as electronic circuits or in software, wherein the control unit has access to a computer program carrying out the control. The control unit 16 does not necessarily need to be arranged separately but can be integrated with the other pieces of equipments for control of the vehicle. The air in the passenger compartment can be circulated in such a way that the air conducted through the heat exchanger 6 is taken from inside the passenger compartment, in which case it is not necessary to heat cold air from outside to blow into the passenger compartment. The cooling system can be arranged to heat more than the two components, the engine and the air in the passenger compartment, only, as described herein, the device then also comprising with advantage more fluid conductors arranged to let the fluid bypass these further components heated by the cooling system. An electric heating element can also be arranged to heat several components at the same time instead of only one at a time. The total number of components that the device is arranged to preheat can also be varied from two and upwards to very large numbers of components. It should also be mentioned that the device does not necessarily need to heat at least two components at every specific occasion or for each specific preheating, but it happens that it is better only to heat one component. This is described in greater detail hereinafter.

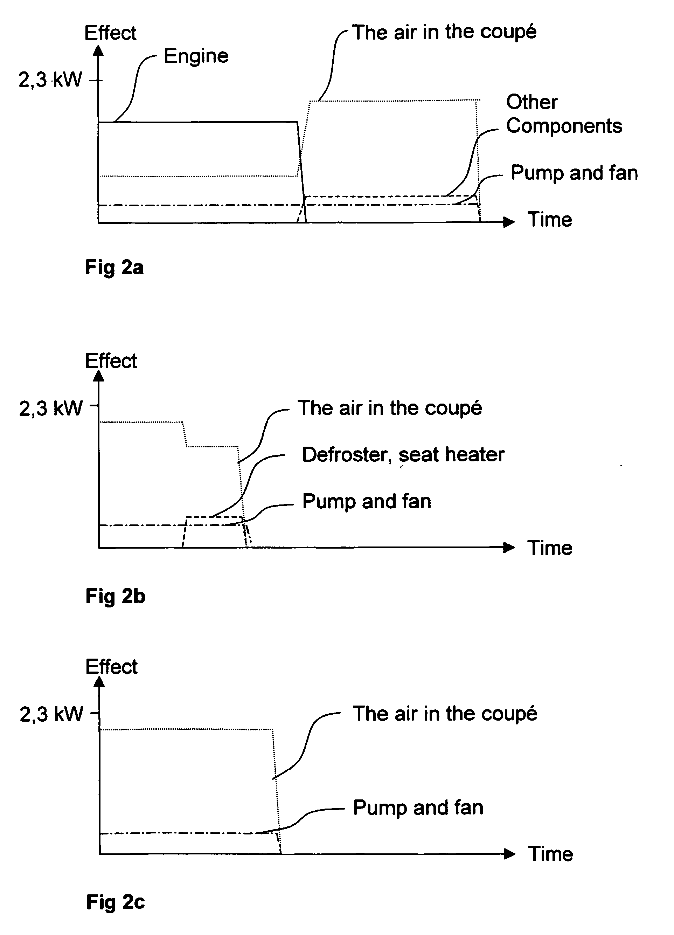

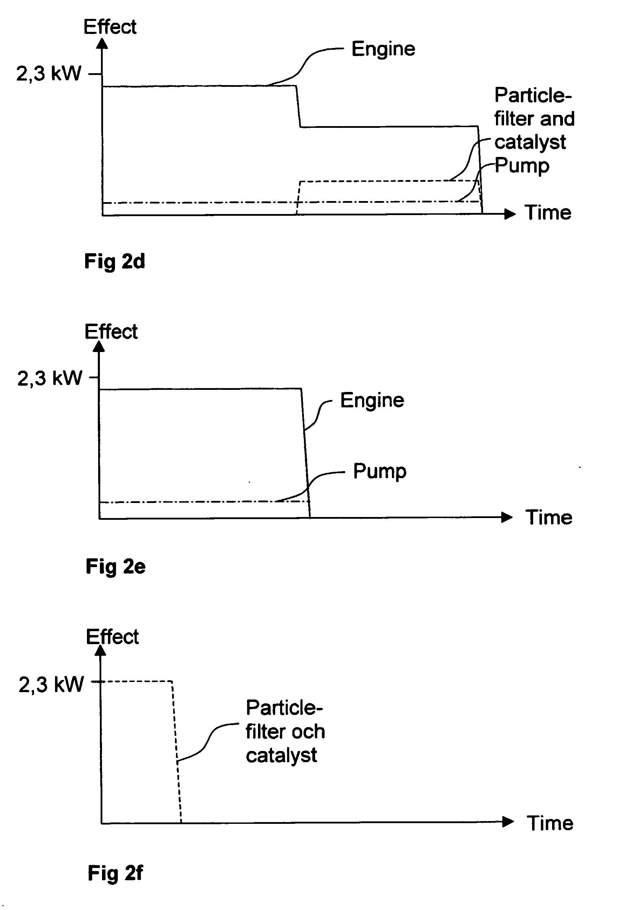

In figs. 2a-e, a number of power distributions and heating times for different main purposes and for different time intervals are shown when the available power is 2,3 kW. Of course, the device can be adapted also for other available powers, wherein the heating times and the power distributions shown here may have to be changed.

In figs. 2a-c, the power distribution for a preferred example of the invention is shown, in which the main purpose of the heating is the comfort for the driver. In fig. 2a the time interval is long, in this case three hours. The control unit 16 assigns, in a first step, the heat-generating member 13, which is arranged to heat the fluid, 2 kW or about 80-90% of the power. The control unit further assigns the pump 38, which is arranged to achieve the flow of the fluid, 0,2 kW or about 3-8% of the power, and the fan 8, which is arranged to blow air into the passenger compartment of the vehicle, 0,1 kW or about 1-7% of the power. Furthermore, said valves 32, 35, 40, 42 are regulated by the control unit 16, such that substantially two thirds of the thermal content of the fluid is transported to the engine and the remaining third of the thermal content of the fluid is transported to the heat exchanger 6 and the air in the passenger compartment 9 of the vehicle. The engine is thus heated with a power of about 1,4 kW and the air in the passenger compartment is heated with a power of about 0,6 kW. The exact flows of the fluid through the heat exchanger 6 and the engine 1, respectively, depend on the heat transferring ability of the heat exchanger 6 and the engine 1, respectively. In the same way, the powers assigned to the pump 38 and the fan 8 depend on the construction of them and on the construction of the vehicle. The high energy emissions from the passenger compartment make a heating of the passenger compartment by 0,6 kW not to elevate the temperature in the passenger compartment substantially, but this heating is mostly intended to melt, for example, snow and ice on the windscreen of the vehicle and/or to heat the interior of the passenger compartment. In a second step of the preheating, the heat generating member 13 is assigned 1,5 kW or 60-70% of the available power, the pump 38, 0,2 kW or 3-8% of the available power, the fan 8, 0,1 kW or 1-7% of the available power and the electrical heating elements 12, 0,4 kW or 10-30% of the power. The heat generating member 13 can thus comprise two electrical heating elements, wherein one is developing a power of 1,5 kW and the other a power of 0,5 kW. By disconnecting the second heat element, the power supplied to the fluid can thus be lowered. Said valves are regulated by the control unit 16 such that the entire thermal content of the fluid is transported to the heat exchanger 6 and thus to the air in the passenger compartment 9 of the vehicle, wherein the valve 13 and the valve 42 are completely closed.

The first and the second step are in this example 1-2 hours long each. If the available power is larger or smaller, the preferred heating times are, of course, also changed. In the same way, the power, which the pump and the fan demand, respectively, can be changed depending on their construction. Preferably, they are given such a power that the air blowing into the passenger compartment is given a chance to melt snow and ice on the screens of the vehicle. The heat transport from the engine 1 to the surroundings is small in comparison with the heat transport from the passenger compartment 9 to the surroundings dependent on the thermal emission from the passenger compartment 9. Thus, it is advantageous if the engine 1 is heated during the first step, even though the engine 1 in this example is not a component of priority. The passenger compartment 9 is also heated during the first step in order for snow and ice covering the screens of the passenger compartment 9 to be given time to melt during the preheating. The air in the passenger compartment 9 is heated with a low power during the first step in order for the thermal loss not to be too large. During the second step of the preheating, the air in the passenger compartment 9 is heated with a high power. At the same time, the electrical heating elements 12 arranged to heat the further components 10 are assigned a low power, which is sufficient since the heat capacity of these components is low. In this preferred example, of which the main purpose is the comfort of the driver, the components seat heating, and defroster are heated, but also the catalyst and the particle filter are heated since the time interval is sufficiently long for also heating these components. If the temperature of the surroundings is low, a larger power is transferred to the passenger compartment in the first step of the heating, and also a longer time interval is produced if there is time. If there is no snow or ice on the screens, the heating of the passenger compartment can be decreased, either by decreasing the power or decreasing the heating time.

In fig. 2b, the power distribution is shown for a preferred example of the invention where the main purpose of the heating is the comfort for the driver. In fig. 2b, the time interval is of an average length, in this example 1 hour, wherein, in a first step, all available power is used to heat the air in the passenger compartment 9 of the vehicle and in a second step 10-30% of the power, or in this case 0,4 kW, is used to heat the seats 10 and the defroster 10 at the same time as the rest of the power is used to heat the air in the passenger compartment 9 of the vehicle. In this example, the time interval is too short to heat the engine 1 and other components with less priority.

In fig. 2c, the power distribution is shown for a preferred example of the invention, where the time interval is short, for example 30 minutes, wherein all of the power is used to heat the air in the passenger compartment 9 of the vehicle. In this example, the time interval is too short for a sufficient amount of energy to be transferred both to the defroster, the seats, and the air in the passenger compartment, wherein the energy is only used to heat the air in the passenger compartment 9.

In figs. 2d-f, the power distributions for further examples of the invention is shown, in which the main purpose of the invention is to decrease the environmental influence of the vehicle.

In fig. 2d, the power distribution for one example of the invention is shown, where the time interval is long, in this example three hours, hence in the first step, all of the available power is used to heat the engine 1 of the vehicle, and in a second step of the preheating, 10-30% of the available power, or in this case 0,4 kW, is used to heat other components, such as the particle filter, the catalyst, and the oil, at the same time as the remaining power is used to heat the engine 1. If the temperature is tolerably high, a certain part of the energy can also be used to heat components that are not prioritised by the selected purpose, such as, for example, the air in the passenger compartment 9 or the rear view mirrors.

In fig. 2e, the power distribution for one example of the invention is shown, where the time interval is of an average length, in this example 1 hour, wherein all power is used to heat the engine 1, i.e. 2,1 kW, to the heat generating member 13 and 0,2 kW to the pump 38. In this example, the energy is not sufficient to heat both the engine 1 and further components 10.

In fig. 2f, the power distribution is shown for an example of the invention, in which the time interval is very short, in this example 15 minutes, hence the available power is used to heat the catalyst 10 and the particle filter 10. In this example, the time interval is too short to heat the engine 1 in a noticeable way, thus the energy instead is utilised to heat the catalyst 10 and the particle filter 10.

Other examples of components with priority are the lower part of the engine 1 and the oil of the engine, when the purpose is to decrease the wear on the engine. Another example of components with priority are the fuel and the combustion chambers 3, when the selected purpose is to increase the chance of starting the engine or to decrease the fuel consumption. A man skilled in the art can easily produce other priority rankings for different components in vehicles, for different purposes with the heating, and for different vehicles. The powers assigned to different components as given above are the preferred powers for an available power of 2,3 kW. If the available power is larger or smaller, the power distributions above are also changed.

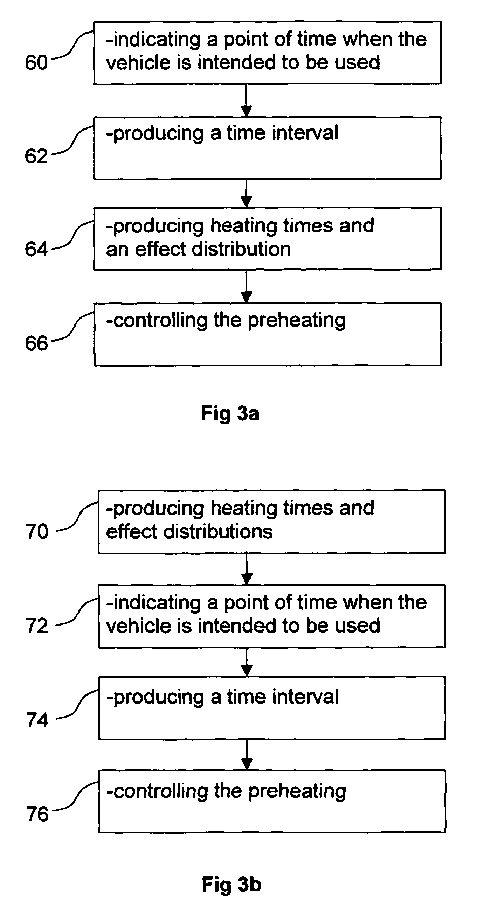

In fig. 3a, a block diagram is shown presenting a method for preheating at least two components of a motor-driven vehicle. The preferred method comprises a first step 60, in which a point of time when the vehicle is intended to be used is given, and in which a main purpose of the preheating is selected. Thereafter, the time up to the point of time when the vehicle is intended to be used is calculated by subtracting the current time and the given point of time. The current time is in this embodiment obtained from said clock member 20, but the current time can also be obtained from an external clock. In another embodiment, the time up to the point of time, when the vehicle is intended to be used, is given instead, hence the calculation above need not to be performed. In that said purpose of the preheating is selected, a priority ranking between the components is also selected. In some of the priority rankings thus selectable, all components of the vehicle are included, and in other selectable priority rankings only a selection of the components of the vehicle are included. Thus, not all the components of the vehicle need necessarily to be heated, even if there is sufficient time.

In a second step, a time interval for the heating is produced. The time interval is automatically produced by said means for producing the time interval. The time interval is calculated in such a way that when the available time for the heating of the selected components of the vehicle is long enough to allow a sufficient energy transfer to the components, a time interval is produced that allows such an energy transfer without making the time interval unnecessarily long. When the time available for the heating of the selected components of the vehicle is too short to allow a sufficient transfer of energy to the components, a time interval is produced which is as long as allowed by the remaining time up to the point of time when the vehicle is intended to be used.

In a third step 64, heating times for the components and a power distribution between the components are produced with consideration to available power, the length of said time interval, a priority ranking between the components depending on the main purpose, the temperature of the surroundings, the thermal transport from said components to the surroundings of the vehicle, and the heat capacity of the components.

In a fourth step 66, the components are heated, the heating of the components being controlled in dependence of said produced heating times and power distribution and of a time remaining to the point of time when the vehicle is intended to be used. Furthermore, a fluid is heated which, during the operation of the vehicle, is intended to cool the engine and when necessary transfer heat from the engine to the air in the passenger compartment for the driver, the fluid being circulated such that the engine and the air in the passenger compartment for the driver is heated.

In fig. 3b, a block diagram is shown presenting a second method for preheating at least two components of a motor-driven vehicle. This method differs from the method described previously in that said producing of heating times and power distributions between the components take place in a first step 70, wherein the heating times and power distributions produced are stored in a memory. The heating times and the power distributions for the components are produced and stored as previously with respect to different time intervals and/or main purposes of the preheating, and consideration is also taken to available power, a priority ranking between the components depending on the main purpose, the temperature of the surroundings, the heat transport from said components to the surrounding of the vehicle, and the heat capacity of the components. Alternatively, the heating times and power distributions are only produced and stored for one main purpose of the preheating.

The method according to this embodiment, further comprises a second step 72, in which a point of time, or a time up to the point, when the vehicle is intended to be used is given and a third step 74, in which a time interval for the heating is produced.

In a fourth step 76 according to this embodiment, the components are heated, wherein the heating of the components is controlled in dependence of said produced heating times and power distribution and of a time remaining to the point of time that the vehicle is to be used. The heating times and the power distribution used during the heating are selected in dependence on the values of a number of parameters, which parameters are the same as those used during the production of the heating times and power distributions in the first step 70. Furthermore, in this fourth step 76, a fluid is heated, which fluid during the operation of the engine normally is intended to cool the engine and to transfer heat from the engine to the air in the passenger compartment when necessary, and circulated such that the engine and the air in the passenger compartment are heated.

## Claims

1. A method for preheating at least two components (1, 9, 10a-c) of a motor-driven vehicle comprising an engine (1), a passenger compartment (9) and a cooling system arranged to cool the engine (1) during the operation of the vehicle, the cooling system further comprising a fluid and a heat exchanger (6) for transferring heat from the fluid to the air in the passenger compartment (9) of the vehicle, one of said components (1, 9, 10a-c) being the engine (1) of the vehicle and another component being the air in the passenger compartment (9), the method comprising
- heating said fluid outside the engine (1),
- achieving a circulating flow of the fluid, and
- distributing the thermal energy supplied to the fluid between the engine (1) and the air in the passenger compartment (9) for heating the engine (1) and the air in the passenger compartment (9),
the method being **characterised in that** the method further comprises:
- producing heating times for the components (1, 9, 10a-c), and a distribution of the available power for preheating of the components (1, 9, 10a-c) between the components (1, 9, 10a-c) being heated, with consideration to one or several parameters,
- controlling the heating of the components (1, 9, 10a-c) of the vehicle in accordance with said heating times and power distribution, by
- controlling said distribution of the thermal energy by controlling the magnitude of the flow of the fluid through the engine (1) and by controlling the magnitude of the transfer of heat (6) from the fluid to the air in the passenger compartment (9) in said heat exchanger (6), such that the thermal energy supplied to the fluid is distributed variably between the engine and the air in the passenger compartment.

2. A method according to claim 1, **characterised in that** one of said parameters comprise information on the heat transports from the components (1, 9, 10a-c) to the environment of the vehicle.

3. A method according to claim 1 or 2, **characterised in that** said distribution is produced with consideration to the temperature of the surroundings.

4. A method according to any of the claims 1-3, **characterised in that** the magnitude of the flow of the fluid through the engine (1) is controlled in such a way that a part of or all of the circulating flow is guided to pass outside the engine (1).

5. A method according to any of the claims 1-4, **characterised in that** the transfer of heat from the fluid to the air in the passenger compartment (9) is controlled by controlling the magnitude of the flow of the fluid through the heat exchanger (6).

6. A method according to any of the claims 1-5, **characterised in that** the transfer of heat from the fluid to the air in the passenger compartment (9) is controlled by controlling the magnitude of an airflow through the heat exchanger (6) and into the passenger compartment (9).

7. A method according to claim 1, **characterised in that** one of said parameters comprise information on the power available for the preheating, wherein the preheating is controlled in such a way that substantially all of the available power is used throughout substantially the entire preheating of the components (1, 9, 10a-c) of the vehicle.

8. A method according to claim 1 or 7, **characterised in that** one of said parameters is the length of a time interval available for the preheating.

9. A method according to claim 7, **characterised in that** the method comprises
- indicating a point of time when the vehicle is intended to be used or the time up to this point of time, and
- producing said time interval for the preheating with consideration to the time up to said point of time.

10. A method according to claim 8 or 9, **characterised in that** consideration is also taken to a priority ranking between the components (1, 9, 10a-c) during the production of said heating times and power distribution when the time interval is shorter than a certain threshold time, wherein the need for heating a high priority component (1, 9, 10a-c) is satisfied at the expense of the need for heating a component with a lower priority (1, 9, 10a-c).

11. A method according to claim 10, **characterised in that** the method comprises the further step of
- selecting a purpose with the preheating, wherein said priority ranking depend on the selected purpose.

12. A device for heating at least two components (1, 9, 10a-c) of a motor driven vehicle comprising an engine (1), a passenger compartment (9), and a cooling system arranged to cool the engine (1) during the operation of the vehicle, the cooling system further comprising a first fluid conductor (5), a fluid, and a heat exchanger (6) arranged to transfer heat from the fluid to the air in the passenger compartment (9) of the vehicle, the first fluid conductor (5) being arranged to conduct said fluid between and through the engine (1) of the vehicle and the heat exchanger (6) for circulation of the fluid between the engine (1) and the heat exchanger (6), one of said components (1, 9, 10a-c) being the engine (1) of the vehicle and another of said components (1, 9, 10a-c) being the air in the passenger compartment (9), the device comprising a heat generating member (13) intended to heat said fluid outside the engine (1) during the heating, **characterised in that** the device comprises an optimisation means (24) being arranged to provide heating times for the components (1, 9, 10a-c) and a distribution of the power available for the heating between the components (1, 9, 10a-c), which heating times and which power distribution are produced with consideration to one or more parameters,
one or several controllable valves (33, 40) arranged to control the magnitude of a flow of the fluid through the engine (1),
a means (8, 33, 40) for controlling the magnitude of the heat transfer from the fluid to the air in the passenger compartment (9) in said heat exchanger, and
a control means (26) controlling the heating of each of the components (1, 9, 10a-c) in accordance with said heating times and said power distribution, and controlling the distribution of the power between the engine (1) and the air in the passenger compartment (9) of the vehicle, such that the thermal power supplied to the fluid is transmitted to and variably distributed between the engine (1) and the air in the passenger compartment (9).

13. A device according to claim 12, **characterised in that** said optimisation means (24) is arranged to provide heating times and a power distribution produced with consideration to heat transports from said components (1, 9, 10a-c) to the environment of the vehicle.

14. A device according to claim 12 or 13, **characterised in that** the device comprises a receiving means (18) arranged to receive information about the temperature of the surroundings, wherein said optimisation means (24) is arranged to provide heating times and a power distribution produced with consideration to the temperature of the surroundings.

15. A device according to any of the claims 12-14, **characterised in that** the device comprises a second fluid conductor (34) connected to the first fluid conductor (5) at each side of the engine (1) such that at least a part of the flow of the fluid may bypass the engine (1) of the vehicle through the second fluid conductor (34), wherein the device comprises a first controllable valve arrangement (35, 42) arranged to control the magnitude of the flow of the fluid through the second fluid conductor (34) and the engine (1) respectively.

16. A device according to any of the claims 12-15, **characterised in that** the device comprises one or several controllable valves (33, 40) arranged to control the magnitude of the flow of the fluid through the heat exchanger (6).

17. A device according to any of the claims 12-16, **characterised in that** the device comprises a member (8) arranged to control an airflow through the heat exchanger (6) and thus controlling the heat transfer between the fluid and the air in the passenger compartment (9) in the heat exchanger (6).

18. A device according to any of the claims 12-17, **characterised in that** the device comprises a pump (38) connected to the first fluid conductor (5) and being arranged to achieve the circulating flow of the fluid through the first fluid conductor (5).

19. A device according to claim 12, **characterised in that** the control means being arranged to control said controllable valves (30, 35, 40, 42), and thus also controlling the flow of the fluid through the engine (1) and the heat exchanger (6), and/or to control said air flow member (8) and the air flow through the heat exchanger.

20. A device according to claim 12, **characterised in that** one of said parameters is the power available for the preheating, the optimisation means (24) and the control means (26) being arranged to control the preheating in such a way that substantially the entire available power is used throughout substantially the entire preheating of the components (1, 9, 10a-c) of the vehicle.

21. A device according to claim 12 or 20, **characterised in that** one of said parameters is the length of a time interval being available for the preheating.

22. A device according to claim 12, **characterised in that** the device comprises an input member (14) for entering a point of time when the vehicle is intended to be used or the time up to this point of time, and a means for producing (22) said time interval for the heating in dependence on said input time and the time up to this point of time.

23. A device according to any of the claims 12-22, **characterised in that** said optimisation means (24) is arranged to, for time intervals shorter than a certain threshold time, provide heating times and power distributions being produced with consideration to a priority ranking between the components (1, 9, 10a-c), wherein the need for heating of a component (1, 9, 10a-c) with high priority is satisfied at the expense of the need for heating of a component (1, 9, 1 0a-c) with lower priority.

24. A device according to claim 23, **characterised in that** the device comprises a receiving means (18) arranged to receive information of a main purpose with the heating, wherein said priority ranking is given by said purpose.

25. A motor driven vehicle comprising a heating device arranged to heat components (1, 9, 10a-c) of the vehicle before the vehicle is operated, **characterised in that** said heating device is a device according to any of the claims 12-24.

## Patentansprüche

1. Verfahren zum Aufheizen von mindestens zwei Komponenten (1, 9, 10a-c) eines motorgetriebenen Fahrzeugs, das einen Motor (1), ein Fahrgastraum (9) und ein Kühlsystem aufweist, das vorgesehen ist, den Motor (1) während dem Betrieb des Fahrzeugs zu kühlen, wobei
das Kühlsystem weiterhin ein Fluid und einen Wärmetauscher (6) aufweist, zum Weiterleiten der Wärme von dem Fluid in die Luft, im Fahrgastraum (9) des Fahrzeugs, wobei eine der Komponenten (1, 9, 10a-c), der Motor (1) des Fahrzeugs ist und eine andere Komponente die Luft in dem Fahrgastraum (9) ist, wobei das Verfahren aufweist:
Erwärmung des Fluids außerhalb des Motors (1),
Erreichen eines zirkulierenden Durchflusses des Fluids und
Verteilen der thermischen Energie, die dem Fluid zwischen dem Motor (1) und der Luft im Fahrgastraum (9) zur Erwärmung des Motors (1) und der Luft im Fahrgastraum (9) zugeführt wird,
wobei das Verfahren **dadurch gekennzeichnet ist, dass** das Verfahren weiterhin aufweist:
Erzeugung von Erwärmungszeiten für die Komponenten (1, 9, 10a-c) und eine Verteilung der abrufbaren Leistung zum Aufheizen der Komponenten (1, 9, 10a-c) zwischen den Komponenten (1, 9, 10a-c), die mit Berücksichtigung eines oder mehrerer Parameter aufgeheizt werden,
Steuerung der Erwärmung der Komponenten (1, 9, 10a-c) des Fahrzeugs in Übereinstimmung mit den Erwärmungszeiten und der Leistungsverteilung, durch
Steuerung der Verteilung der thermischen Energie durch Steuerung der Menge des Fluiddurchflusses durch den Motor (1) und durch Steuerung der Menge der Wärmeweiterleitung (6) von dem Fluid in die Luft im Fahrgastraum (9) in dem Wärmetauscher (6), so dass die thermische Energie, die dem Fluid zugeführt ist, variabel zwischen dem Motor und der Luft in dem Fahrgastraum verteilt wird.

2. Verfahren gemäß Anspruch 1, **dadurch gekennzeichnet, dass** einer der Parameter Informationen über den Wärmetransport von den Komponenten (1, 9, 10a-c) in die Umgebung des Fahrzeugs beinhaltet.

3. Verfahren gemäß Anspruch 1 oder 2, **dadurch gekennzeichnet, dass** die Verteilung im Hinblick auf die Temperatur der Umgebung erzeugt wird.

4. Verfahren gemäß einem der Ansprüche 1 bis 3, **dadurch gekennzeichnet, dass** die Größe des Fluiddurchflusses durch den Motor (1) derart gesteuert ist, dass ein Teil oder der ganze zirkulierende Durchfluss geführt wird, um außerhalb des Motors (1) abzufließen.

5. Verfahren gemäß einem der Ansprüche 1 bis 4, **dadurch gekennzeichnet, dass** die Wärmeleitung von dem Fluid in die Luft im Fahrgastraum (9) durch die Steuerung der Menge des Fluiddurchflusses durch den Wärmetauscher (6) gesteuert ist.

6. Verfahren gemäß einem der Ansprüche 1 bis 5, **dadurch gekennzeichnet, dass** der Wärmeaustausch von dem Fluid in die Luft im Fahrgastraum (9) durch die Steuerung der Menge des Luftdurchflusses durch den Wärmetauscher (6) und in den Fahrgastraum (9) gesteuert ist.

7. Verfahren gemäß Anspruch 1, **dadurch gekennzeichnet, dass** einer der Parameter Informationen von der für das Aufheizen verfügbaren Leistung aufweist, wobei das Aufheizen derart gesteuert ist, dass im wesentlichen die ganze verfügbare Leistung im wesentlichen während des ganzen Aufheizens der Komponenten (1, 9, 10a-c) des Fahrzeugs verwendet wird.

8. Verfahren gemäß einem der Ansprüche 1 oder 7, **dadurch gekennzeichnet, dass** einer der Parameter die Länge eines für das Aufheizen verfügbaren Zeitintervalls ist.

9. Verfahren gemäß Anspruch 7, **dadurch gekennzeichnet, dass** das Verfahren aufweist:
Bezeichnen eines Zeitpunktes, zu dem das Fahrzeug benutzt werden soll oder die Zeitdauer bis zu diesem Zeitpunkt, und
Erzeugen der Zeitintervalle für das Aufheizen im Hinblick auf die Zeitdauer bis zu dem Zeitpunkt.

10. Verfahren gemäß Anspruch 8 oder 9, **dadurch gekennzeichnet, dass** bei den Komponenten (1, 9, 10a-c) während der Erzeugung der Aufheizzeiten und der Leistungsverteilung eine Rangfolge in Betracht gezogen wird, wenn das Zeitintervall kürzer ist, als eine bestimmte Grenzzeit, wobei das Bedürfnis der Erwärmung einer Komponente (1, 9, 10a-c) mit hoher Priorität auf Kosten des Bedürfnisses der Erwärmung einer Komponente mit niedrigerer Priorität (1, 9, 10a-c) befriedigt wird.

11. Verfahren gemäß Anspruch 10, **dadurch gekennzeichnet, dass** das Verfahren den weiteren Schritt aufweist:
Auswählen eines Zwecks der Aufheizung, wobei die Rangfolge von dem ausgewählten Zweck abhängt.

12. Vorrichtung zur Erwärmung von mindestens zwei Komponenten (1, 9, 10 a-c) eines motorgetriebenen Fahrzeugs, das einen Motor (1), einen Fahrgastraum (9) und ein Kühlsystem aufweist, das angeordnet ist, um den Motor (1) während des Betriebs des Fahrzeugs zu kühlen, wobei das Kühlsystem weiterhin einen ersten Fluidleiter (5), ein Fluid und einen Wärmetauscher (6) aufweist, der angeordnet ist, um die Hitze von dem Fluid in die Luft im Fahrgastraum (9) des Fahrzeugs zu leiten, wobei der erste Fluidleiter (5) angeordnet ist, um das Fluid durch und zwischen den Motor (1) des Fahrzeugs und den Wärmetauscher (6) zur Zirkulation des Fluids zwischen dem Motor (1) und dem Wärmetauscher (6) zu leiten, wobei eine der Komponenten (1, 9, 10 a-c) der Motor (1) des Fahrzeugs ist und eine andere der Komponenten (1, 9, 10 a-c) die Luft im Fahrgastraum (9) ist, wobei die Vorrichtung ein Wärmeerzeugungsteil (13) aufweist, das das Fluid außerhalb des Motors (1) während der Erwärmung erhitzen soll, **dadurch gekennzeichnet, dass** die Vorrichtung aufweist:
ein Optimierungsmittel (24), das angeordnet ist, um für die Komponenten (1, 9, 10 a-c) Erwärmungszeiten zu liefern und eine Verteilung der für die Erwärmung verfügbaren Leistung zwischen den Komponenten (1, 9, 10 a-c), wobei die Erwärmungszeiten und die Leistungsverteilung im Hinblick auf einen oder mehrere Parameter erzeugt werden,
ein oder mehrere steuerbare Ventile (33, 40), die angeordnet sind, um die Größe eines Fluiddurchflusses durch den Motor (1) zu steuern,
ein Mittel (8, 33, 40) zum Steuern der Größe der Wärmeleitung von dem Fluid in die Luft in dem Fahrgastraum (9) in den Wärmetauscher, und
ein Steuermittel (26), das die Erwärmung von jeder der Komponenten (1, 9, 10 a-c), in Übereinstimmung mit den Erwärmungszeiten und der Leistungsverteilung steuert, und die Verteilung der Leistung zwischen dem Motor (1) und der Luft im Fahrgastraum (9) des Fahrzeugs steuert, so dass die thermische Leistung, die dem Fluid zugeführt wird, zwischen dem Motor (1) und der Luft im Fahrgastraum (9) übertragen und variabel verteilt wird.

13. Vorrichtung gemäß Anspruch 12, **dadurch gekennzeichnet, dass** das Optimierungsmittel (24) angeordnet ist, um Erwärmungszeiten und eine Leistungsverteilung zu liefern, die im Hinblick auf den Wärmetransport von den Komponenten (1, 9, 10 a-c) in die Umgebung des Fahrzeugs erzeugt werden.

14. Vorrichtung gemäß Anspruch 12 oder 13, **dadurch gekennzeichnet, dass** die Vorrichtung ein Empfangsmittel (18) aufweist, das angeordnet ist, um Informationen über die Temperatur der Umgebung zu empfangen, wobei das Optimierungsmittel (24) angeordnet ist, um Erwärmungszeiten und eine Leistungsverteilung zu liefern, die im Hinblick auf die Temperatur der Umgebung erzeugt werden.

15. Vorrichtung gemäß einem der Ansprüche 12 bis 14, **dadurch gekennzeichnet, dass** die Vorrichtung einen zweiten Fluidleiter (34) aufweist, der mit dem ersten Fluidleiter (5) auf jeder Seite des Motors (1) derart verbunden ist, dass mindestens ein Teil des Fluidflusses den Motor (1) des Fahrzeugs durch den zweiten Fluidleiter (34) umgehen kann, wobei die Vorrichtung eine erste steuerbare Ventilanordnung (35, 42) aufweist, die angeordnet ist, um jeweils die Größe des Fluidflusses durch den zweiten Fluidleiter (34) und den Motor (1) zu steuern.

16. Vorrichtung gemäß einem der Ansprüche 12 bis 15, **dadurch gekennzeichnet, dass** die Vorrichtung ein oder mehrere steuerbare Ventile (33, 40) aufweist, die angeordnet sind, um die Größe des Fluidflusses durch den Wärmetauscher (6) zu steuern.

17. Vorrichtung gemäß einem der Ansprüche 12 bis 16, **dadurch gekennzeichnet, dass** die Vorrichtung ein Teil (8) aufweist, das angeordnet ist, um den Luftstrom durch den Wärmetauscher (6) und damit die Wärmeleitung zwischen dem Fluid und der Luft im Fahrgastraum (9) im Wärmetauscher (6) zu steuern.

18. Vorrichtung gemäß einem der Ansprüche 12 bis 17, **dadurch gekennzeichnet, dass** die Vorrichtung eine Pumpe (38) aufweist, die mit dem ersten Fluidleiter (5) verbunden ist und angeordnet ist, um den zirkulierenden Fluiddurchfluss durch den ersten Fluidleiter (5) zu erreichen.

19. Vorrichtung gemäß Anspruch 12, **dadurch gekennzeichnet, dass** das Steuermittel angeordnet ist, um die steuerbaren Ventile (30, 35, 40, 42) zu steuern und damit auch den Fluidfluss durch den Motor (1) und den Wärmetauscher (6) zu steuern und/oder das Luftstromteil (8) und den Luftstrom durch den Wärmetauscher zu steuern.

20. Vorrichtung gemäß Anspruch 12, **dadurch gekennzeichnet, dass** einer der Parameter die verfügbare Leistung für das Aufheizen ist, wobei das Optimierungsmittel (24) und das Steuermittel (26) angeordnet sind, um die Aufheizung so zu steuern, dass im wesentlichen die gesamte verfügbare Leistung während der ganzen Aufheizung der Komponenten (1, 9, 10 a-c) des Fahrzeugs verwendet wird.

21. Vorrichtung gemäß Anspruch 12 oder 20, **dadurch gekennzeichnet, dass** einer der Parameter die Länge eines Zeitintervalls ist, das für das Aufheizen verfügbar ist.

22. Vorrichtung gemäß Anspruch 12, **dadurch gekennzeichnet, dass** die Vorrichtung ein Eingangsteil (14), zum Einführen eines Zeitpunkts aufweist, zu dem das Fahrzeug benutzt werden soll oder die Zeitdauer bis zu diesem Zeitpunkt und ein Mittel zum Erzeugen des Zeitintervalls zur Erwärmung in Abhängigkeit von der Eingabezeit und der Zeitdauer bis zu diesem Zeitpunkt.

23. Vorrichtung gemäß einem der Ansprüche 12 bis 22, **dadurch gekennzeichnet, dass** das Optimierungsmittel (24) angeordnet ist, um für Zeitintervalle, die kürzer als eine bestimmte Grenzzeit sind, Wärmezeiten und Leistungsverteilung zu liefern, die im Hinblick auf eine Rangfolge zwischen den Komponenten (1, 9, 10 a-c) erzeugt werden, wobei das Bedürfnis zur Erwärmung einer Komponente (1, 9, 10 a-c) mit hoher Priorität, auf Kosten des Bedürfnisses zur Erwärmung einer Komponente (1, 9, 10 a-c) mit niedrigerer Priorität befriedigt wird.

24. Vorrichtung gemäß Anspruch 23, **dadurch gekennzeichnet, dass** die Vorrichtung ein Empfangsmittel (18) aufweist, das angeordnet ist, um Informationen eines Hauptzwecks der Erwärmung zu empfangen, wobei die Rangfolge durch diesen Zweck gegeben ist.

25. Motorgetriebenes Fahrzeug, das eine Erwärmungs vorrichtung aufweist, die angeordnet ist, um Komponenten (1, 9, 10 a-c) eines Fahrzeugs aufzuwärmen, bevor das Fahrzeug betrieben wird, **dadurch gekennzeichnet, dass** die Erwärmungsvorrichtung eine Vorrichtung gemäß einem der Ansprüche 12 bis 24 ist.

## Revendications

1. Procédé de préchauffage d'au moins deux composants (1, 9, 10a-c) d'un véhicule motorisé comprenant un moteur (1), un habitacle (9) et un système de refroidissement agencé pour refroidir le moteur (1) lors du fonctionnement du véhicule, le système de refroidissement comprenant en outre un fluide et un échangeur thermique (6) pour transférer la chaleur du fluide à l'air dans l'habitacle (9) du véhicule, l'un desdits composants (1, 9, 10a-c) étant le moteur (1) du véhicule et un autre composant étant l'air dans l'habitacle (9), le procédé comprenant :
- le chauffage dudit fluide à l'extérieur du moteur (1),
- l'obtention d'un écoulement de circulation du fluide, et
- la répartition de l'énergie thermique fournie au fluide entre le moteur (1) et l'air dans l'habitacle (9) pour chauffer le moteur (1) et l'air dans l'habitacle (9),
le procédé étant **caractérisé en ce qu'**il comprend en outre :
- la production de temps de chauffage pour les composants (1, 9, 10a-c) et une répartition de la puissance disponible pour le préchauffage des composants (1, 9, 10a-c) entre les composants (1, 9, 10a-c) en cours de chauffage, en prenant en considération un ou plusieurs paramètres,
- la commande du chauffage des composants (1, 9, 10a-c) du véhicule selon lesdits temps de chauffage et ladite répartition de puissance,
- en commandant ladite répartition de l'énergie thermique par une commande de l'amplitude de l'écoulement du fluide à travers le moteur (1), une commande de l'amplitude du transfert de la chaleur (6) du fluide à l'air dans l'habitacle (9), dans ledit échangeur thermique (6), de telle sorte que l'énergie thermique fournie au fluide est répartie de façon variable entre le moteur et l'air dans l'habitacle.

2. Procédé selon la revendication 1, **caractérisé en ce que** l'un desdits paramètres comprend des informations sur les transports de chaleur à partir des composants (1, 9, 10a-c) à l'environnement du véhicule.

3. Procédé selon la revendication 1 ou 2, **caractérisé en ce que** ladite répartition est produite en prenant en considération la température des éléments environnants.

4. Procédé selon l'une quelconque des revendications 1 à 3, **caractérisé en ce que** l'amplitude de l'écoulement du fluide à travers le moteur (1) est commandée de telle manière qu'une partie ou l'ensemble de l'écoulement de circulation est guidé pour passer à l'extérieur du moteur (1).

5. Procédé selon l'une quelconque des revendications 1 à 4, **caractérisé en ce que** le transfert de chaleur du fluide à l'air dans l'habitacle (9) est commandé en commandant l'amplitude de l'écoulement du fluide à travers l'échangeur thermique (6).

6. Procédé selon l'une quelconque des revendications 1 à 5, **caractérisé en ce que** le transfert de chaleur du fluide à l'air dans l'habitacle (9) est commandé en commandant l'amplitude d'un écoulement d'air à travers l'échangeur thermique (6) et dans l'habitacle (9).

7. Procédé selon la revendication 1, **caractérisé en ce que** l'un desdits paramètres comprend des informations sur la puissance disponible pour le préchauffage, dans lequel le préchauffage est commandé de telle manière que sensiblement l'ensemble de la puissance disponible est utilisé sur sensiblement l'intégralité du préchauffage des composants (1, 9, 10a-c) du véhicule.

8. Procédé selon la revendication 1 ou 7, **caractérisé en ce que** l'un desdits paramètres est la longueur d'un intervalle temporel disponible pour le préchauffage.

9. Procédé selon la revendication 7, **caractérisé en ce que** le procédé comprend :
- l'indication d'un moment où le véhicule est censé être utilisé ou l'indication d'une durée jusqu'à ce moment, et
- la production dudit intervalle temporel pour le préchauffage en prenant en considération la durée jusqu'audit moment.

10. Procédé selon la revendication 8 ou 9, **caractérisé en ce qu'**on prend également en considération un ordre de priorité entre les composants (1, 9, 10a-c) lors de la production desdits temps de chauffage et de la répartition de puissance, lorsque l'intervalle temporel est plus court qu'un certain temps de seuil, dans lequel le besoin de chauffage d'un composant de priorité élevée (1, 9, 10a-c) est satisfait aux dépens du besoin de chauffage d'un composant à priorité moins élevée (1, 9, 10a-c).

11. Procédé selon la revendication 10, **caractérisé en ce que** le procédé comprend, en outre, l'étape de :
- sélection d'un objectif avec le préchauffage, dans lequel ledit ordre de priorité dépend de l'objectif sélectionné.

12. Dispositif de chauffage d'au moins deux composants (1, 9, 10a-c) d'un véhicule motorisé comprenant un moteur (1), un habitacle (9), et un système de refroidissement agencé pour refroidir le moteur (1) lors du fonctionnement du véhicule, le système de refroidissement comprenant, en outre, un premier conducteur fluide (5), un fluide, et un échangeur thermique (6), agencé pour transférer la chaleur du fluide à l'air dans l'habitacle (9) du véhicule, le premier conducteur fluide (5) étant agencé pour conduire ledit fluide entre et à travers le moteur (1) du véhicule et l'échangeur thermique (6) pour la circulation du fluide entre le moteur (1) et l'échangeur thermique (6), l'un desdits composants (1, 9, 10a-c) étant le moteur (1) du véhicule et un autre desdits composants (1, 9, 10a-c) étant l'air dans l'habitacle (9), le dispositif comprenant un élément de génération de chaleur (13) destiné à chauffer ledit fluide à l'extérieur du moteur (1) lors du chauffage, **caractérisé en ce que** le dispositif comprend :
un moyen d'optimisation (24) agencé pour fournir les temps de chauffage pour les composants (1, 9, 10a-c), et une répartition de la puissance disponible pour le chauffage entre les composants (1, 9, 10a-c), lesquels temps de chauffage et laquelle répartition de puissance sont produits en prenant en considération au moins un paramètre,
une ou plusieurs soupapes pouvant être commandées (33, 40) agencée pour commander l'amplitude d'un écoulement du fluide à travers le moteur (1),
un moyen (8, 33, 40) permettant de commander l'amplitude du transfert de chaleur du fluide à l'air dans l'habitacle (9) dans ledit échangeur thermique, et
un moyen de commande (26) commandant le chauffage de chacun des composants (1, 9, 10a-c) selon lesdits temps de chauffage et ladite répartition de puissance, et commandant la répartition de la puissance entre le moteur (1) et l'air dans l'habitacle (9) du véhicule, de telle sorte que la puissance thermique fournie au fluide est transmise à et répartie de façon variable entre le moteur (1) et l'air dans l'habitacle (9).

13. Dispositif selon la revendication 12, **caractérisé en ce que** ledit moyen d'optimisation (24) est agencé pour fournir les temps de chauffage et une répartition de puissance produite en prenant en considération les transports de chaleur à partir desdits composants (1, 9, 10a-c) à l'environnement du véhicule.

14. Dispositif selon la revendication 12 ou 13, **caractérisé en ce que** le dispositif comprend un moyen de réception (18) agencé pour recevoir des informations concernant la température des éléments environnants, dans lequel ledit moyen d'optimisation (24) est agencé pour fournir des temps de chauffage et une répartition de la puissance produite en prenant en considération la température des éléments environnants.

15. Dispositif selon l'une quelconque des revendications 12 à 14, **caractérisé en ce que** le dispositif comprend un deuxième conducteur fluide (34), raccordé au premier conducteur fluide (5), au niveau de chaque côté du moteur (1), de telle sorte qu'au moins une partie de l'écoulement du fluide peut contourner le moteur (1) du véhicule à travers le deuxième conducteur fluide (34), dans lequel le dispositif comprend un premier agencement de soupapes pouvant être commandées (35, 42), agencées pour commander l'amplitude de l'écoulement du fluide à travers le deuxième conducteur fluide (34) et le moteur (1), respectivement.

16. Dispositif selon l'une quelconque des revendications 12 à 15, **caractérisé en ce que** le dispositif comprend au moins une soupape pouvant être commandée (33, 40), agencée pour commander l'amplitude de l'écoulement du fluide à travers l'échangeur thermique (6).

17. Dispositif selon l'une quelconque des revendications 12 à 16, **caractérisé en ce que** le dispositif comprend un élément (8) agencé pour commander un écoulement d'air à travers l'échangeur thermique (6), et commandant ainsi le transfert de chaleur entre le fluide et l'air dans l'habitacle (9) dans l'échangeur thermique (6).

18. Dispositif selon l'une quelconque des revendications 12 à 17, **caractérisé en ce que** le dispositif comprend une pompe (38) raccordée au premier conducteur fluide (5) et agencée pour obtenir l'écoulement de circulation du fluide à travers le premier conducteur fluide (5).

19. Dispositif selon la revendication 12, **caractérisé en ce que** le moyen de commande est agencé pour commander lesdites soupapes pouvant être commandées (30, 35, 40, 42), et commande également l'écoulement du fluide à travers le moteur (1) et l'échangeur thermique (6), et/ou pour commander ledit élément d'écoulement d'air (8) et l'écoulement d'air à travers l'échangeur thermique.

20. Dispositif selon la revendication 12, **caractérisé en ce que** l'un desdits paramètres est la puissance disponible pour le préchauffage, le moyen d'optimisation (24) et le moyen de commande (26) étant agencés pour commander le préchauffage de telle manière que sensiblement l'intégralité de la puissance disponible est utilisée sur sensiblement l'intégralité du préchauffage des composants (1, 9, 10a-c) du véhicule.

21. Dispositif selon la revendication 12 ou 20, **caractérisé en ce que** l'un desdits paramètres est la longueur d'un intervalle temporel disponible pour le préchauffage.

22. Dispositif selon la revendication 12, **caractérisé en ce que** le dispositif comprend un élément d'entrée (14) permettant d'entrer un moment lorsque le véhicule est destiné à être utilisé ou la durée jusqu'à ce moment, et un moyen de production (22) dudit intervalle temporel pour le chauffage en fonction dudit temps d'entrée et de la durée jusqu'à ce moment.

23. Dispositif selon l'une quelconque des revendications 12 à 22, **caractérisé en ce que** ledit moyen d'optimisation (24) est agencé, pour des intervalles temporels plus courts qu'un certain temps de seuil, pour fournir des temps de chauffage et des répartitions de puissance produits en prenant en considération un ordre de priorité entre les composants (1, 9, 10a-c), dans lequel le besoin de chauffage d'un composant (1, 9, 10a-c) de priorité élevée est satisfait aux dépens du besoin de chauffage d'un composant (1, 9, 10a-c) composant à priorité moins élevée.

24. Dispositif selon la revendication 23, **caractérisé en ce que** le dispositif comprend un moyen de réception (18), agencé pour recevoir des informations d'un objectif principal avec le chauffage, tandis que ledit ordre de priorité est donné par ledit objectif.

25. Véhicule motorisé comprenant un dispositif de chauffage agencé pour chauffer les composants (1, 9, 10a-c) du véhicule avant que le véhicule ne soit mis en fonctionnement, **caractérisé en ce que** ledit dispositif de chauffage est un dispositif selon l'une quelconque des revendications 12 à 24.
